# EUROPEAN PATENT APPLICATION

(11) **EP 2 168 914 A1**
(43) Date of publication of application: **31.03.2010**
(21) Application number: 08791112.9
(22) Date of filing: 11.07.2008
(51) Int. Cl.: C01B 31/02, B82B 1/00, B82B 3/00

(54) **GRANULATED PRODUCT OF CARBON NANOTUBE, AND METHOD FOR PRODUCTION THEREOF**

(30) Priority: 11.07.2007 JP 2007182111; 24.08.2007 JP 2007217975; 24.08.2007 JP 2007217979
(71) Applicant: Mikuni Shikiso Kabushiki Kaisha, Himeji-shi Hyogo 671-0234 (JP)
(72) Inventor: HISASHI, Hideyuki, Himeji-shi Hyogo 671-0234 (JP); KADOWAKI, Tetsuji, Himeji-shi Hyogo 671-0234 (JP); NAGATA, Takefumi, Himeji-shi Hyogo 671-0234 (JP)
(74) Representative: Schwabe - Sandmair - Marx
(86) International application number: PCT/JP2008/062631
(87) International publication number: WO 2009/008516

(57) **Abstract**

[PROBLEMS] A carbon nanotube has a low apparent bulk density and therefore has serious problems in the workability upon use. Particularly when two or more types of carbon nanotubes are used together, the workability becomes more serious, and it is more difficult to exploit the properties of the carbon nanotubes.

[MEANS FOR SLOVING THE PROBLEMS] One or more types of carbon nanotubes are mixed and granulated. In this manner, it becomes possible to increase the apparent bulk density of a carbon nanotube, improve the workability of a carbon nanotube during the production of a resin master batch or a dispersion solution, and exploit the properties of a carbon nanotube satisfactorily.

## Description

### TECHNICAL FIELD

The present invention relates to a carbon nanotube granulated product obtained by granulating carbon nanotubes, and a method for producing the same.

### BACKGROUND ART

The carbon nanotube is a carbon isotope, but unlike the other carbon isotopes such as carbon black, diamond, carbon fiber, graphite, or fullerene, it has a tubular shape having a high aspect ratio of a diameter in the range of several nanometers to approximately 500 nm to a length in the range of several dozens of nanometers to several dozens of micrometers (hereinabove, an average value in the case of having a distribution. The same applies hereinafter). Various carbon nanotubes are available depending on the production methods, post-treatment processes, etc. However, the shape thereof is broadly divided into a single-walled carbon nanotube, a double-walled carbon nanotube, and a multi-walled carbon nanotube.

The carbon nanotube production method includes arc discharge, catalyst-supported vapor deposition, laser ablation, and other methods (Nonpatent Document 1). The final shape of the carbon nanotube varies depending on these production methods. In particular, some of the methods produces a carbon nanotube in an aggregated form. This aggregate is tightly bundled to form a state where carbon nanotubes are intricately entangled, so that the carbon nanotubes in such state cannot exhibit various properties such as electrical property, thermal conductive property, and mechanical property. For practical purposes, it is possible to obtain these properties after the carbon nanotube aggregate is "pulverized" by shearing. Therefore, it is important that by-products or impurities be removed from the carbon nanotube aggregate to thereby be in a purified state and that extremely thin fibers of the carbon nanotube be disentangled to thereby be in a state of an agglomerate of fibrous materials. As a result, the carbon nanotube becomes an extremely bulky state (low in apparent specific gravity) and highly scattered.

### DISCLOSURE OF THE INVENTION

It is therefore considered that a carbon nanotube is granulated to increase the apparent specific gravity. A method for processing a carbon nanotube by a high-speed flow impact process has been proposed (Patent Documents 1 and 2). This method uses an apparatus for pulverizing powders in a high-speed airflow and forming complexes. This apparatus is primarily applied to adhere different kinds of powder microparticles onto surfaces of powder mother particles by high-speed flow impact. However, it is disadvantageous that the apparatus can only granulate extremely small particles having particle sizes of 200 µm or less due to a high speed of 60 to 100 m/s at the outer periphery of rotation, so that granulation on the order of millimeters is difficult. Therefore, problems regarding safety, environmental pollution, and handling property due to scattering have been unsolved. Moreover, such poor handling and poor workability inhibit the dispersibility of the carbon nanotube in its applications, failing to satisfactorily exploit its properties.

Further, there has been a method for producing a spherical-shaped carbon nanotube bead by gelating and hardening a carbon nanotube using one kind or two or more kinds selected from the group consisting of tetrahydrofuran, acetone, and distilled water (Patent Document 3). However, this technique is intended to produce a lighter-weight carbon material in order to obtain a hydrogen-occlusion body, so that it does not have any intention of increasing the bulk specific gravity to improve handling of the carbon nanotube. In fact, according to the description in the above specification, the carbon nanotube used has a limitative diameter, which is in the range of 20 to 50 nm. Furthermore, according to the examples, the obtained carbon nanotube bead absorbs water in an amount twice or more than the weight of the bead. However, the carbon nanotube generally has a hydrophobic surface covered with a carbonaceous aromatic ring, so that it is considered that the carbon nanotube that satisfies such amount of absorption of water is very special. Further, although the carbon nanotube generally has a bulk specific gravity of 0.09 kg/l or less, the carbon nanotube bead thus produced in this process has a pour density of 0.3 to 0.4 kg/l. Therefore, as in the phrase "gelating and hardening", the carbon nanotube bead is obtained by intricately entangling carbon nanotubes in a very high-concentrated state, so that it can be imagined that the carbon nanotube bead has poorer dispersibility into a resin or a solution than that before formed into beads. Therefore, it can be easily imagined that the bead for a resin compound or for a dispersion in this method cannot satisfactorily exploit the properties of a carbon nanotube. In addition, although the description indicates that a product having "a diameter of 0.5 mm to 50 mm" has been obtained, its distribution is not shown, and the proportion of the solvent to the carbon nanotube is unclear. The specific operation method is that a carbon nanotube and a solvent are mixed into a paste, the paste is then molded into a spherical shape, and the molded product is aggregated with rolling in a round-bottomed flask. However, it is not conceivable that such method produces equally-sized beads in mass production.

Patent Document 1: Japanese Unexamined Patent Publication No. 2005-239531
Patent Document 2: Japanese Unexamined Patent Publication No. 2006-143532
Patent Document 3: Japanese Unexamined Patent Publication No. 2007-843461
Nonpatent Document 1: NTS Inc., "Fundamentals of Carbon Nanotube and the Front Line of Their Industrialization", 2002, p. 6-18
Nonpatent Document 2: Carbon Black Association, "Handbook of Carbon Black", 1995, p. 317-323

The carbon black made of the same carbon material as a carbon nanotube is generally obtained by granulation, and various granulation methods such as dry granulation or wet granulation are known. However, generally, as for the carbon black, (1) the crystallite size is small in the range of 10 to 15 Å; (2) the amount of surface functional groups is large, the volatile content is 0.5% or more at 950°C, and the wettability by water is good because of the large amount of surface functional groups; (3) a capillary force is generated because of its appropriately grown structure, so that according to some opinions, penetration of water, an organic solvent, a surfactant, a resin, or other binder into a gap between the respective particles can aggregate the particles with an effect such as the capillary force; and also (4) a small particle size and a low aspect ratio provide an interaction between particles to develop a cohesive force, which can maintain the shape of the granulated product. Using these effects, it is common to granulate a carbon black by pressurizing or with a small amount of water, under normal pressure, so that a granulated product not having a void in the interior thereof is obtained.

On the other hand, as for a carbon nanotube (1) crystallites are largely grown (the outermost shell of the carbon nanotube is formed of a sheet having a high degree of crystallinity in which benzene rings are linked to one another, some crystallites have a size of 400 Å); (2) the amount of functional groups is small (since a functional group is positioned in a lattice defect site on the outermost shell and the degree of crystallite growth is high, the lattice defect is few and the amount of functional group is small); and (3) pour density is low and air is contained in large amount because of a linear structure with a large aspect ratio (since the carbon nanotube has an aspect ratio of at least 30 times or more, usually 100 times or more of the carbon black, the length in the major diameter direction is on the order of micron in many cases, and the shape is fibrous, its agglomerate has a fuzzball-like structure with many voids, and the voids in the agglomerate are too large to produce capillary action.

Any of these characteristics is a factor of inhibiting wetting of carbon nanotubes with water or a solvent, so that even if the carbon black granulation method is applied as is, satisfactory results cannot be obtained.

According to these viewpoints, it is an object of the present invention to provide a granulated product capable of improving the scattering, handling and workability of carbon nanotubes, which have been disadvantageous, and of fully exploiting the original function of a single or plural kinds of carbon nanotubes.
The present inventors have found that, in the granulation of a carbon nanotube, as a different approach from using a carbon black, it is necessary to granulate a carbon nanotube by the action of a vapor-liquid interface or a liquid-liquid interface. In order to solve the aforementioned problems (1) to (3), with improved wetting of a carbon nanotube with water or a solvent, wholehearted investigation by the present inventors in order to find a granulating method capable of solving the problems has led to the present invention.

An object of the present invention is to solve the aforementioned problems and to provide a carbon nanotube granulated product having less scattering with improved handling property and maintaining dispersibility into a resin and a solvent. Specifically, the present invention provides the following:
(1) A method for producing a carbon nanotube granulated product comprising granulating a carbon nanotube using a vapor-liquid interface or a liquid-liquid interface, in which a weight ratio of carbon nanotube:solvent is 1:1 or more;
(2) A carbon nanotube granulated product obtained by granulating a carbon nanotube using a vapor-liquid interface or a liquid-liquid interface so that a weight ratio of carbon nanotube: solvent is 1:1 or more;
(3) The carbon nanotube granulated product as described in (2) above, in which the carbon nanotube granulated product having a particle size of 0.3 mm or more and 10 mm or less is 50% by weight or more;
(4) The carbon nanotube granulated product as described in (2) or (3) above, in which the carbon nanotube granulated product having a particle size of 0.3 mm or more and 10 mm or less is 75% by weight or more;
(5) The carbon nanotube granulated product as described in any one of (2) to (4) above, in which the carbon nanotube granulated product having a particle size of 0.5 mm or more and 4 mm or less is 50% by weight or more;
(6) The carbon nanotube granulated product as described in any one of (2) to (5) above, in which the carbon nanotube granulated product having a particle size of 0.5 mm or more and 4 mm or less is 75% by weight or more;
(7) The carbon nanotube granulated product as described in any one of (2) to (6) above, having a spherical or spheroidal shape;
(8) The carbon nanotube granulated product as described in any one of (2) to (7) above, having a strength of 0.2 gw or more and 200 gw or less;
(9) The method for producing a carbon nanotube granulated product as described in (1) above, including granulating a carbon nanotube having a diameter of 0.5 nm or more and 500 nm or less;
(10) The method for producing a carbon nanotube granulated product as described in (1) or (9) above, including granulating a carbon nanotube having a diameter of 0.5 nm or more and 200 nm or less;
(11) The method for producing a carbon nanotube granulated product as described in (1), (9), or (10) above, in which the carbon nanotube granulated product is produced using a binder;
(12) The method for producing a carbon nanotube granulated product as described in (1), (9), (10), or (11) above, in which granulation is performed in the presence of the binder;
(13) The method for producing a carbon nanotube granulated product as described in any one of (1), (9), and (10) to (12) above, in which the binder contains one or more kinds of solutions selected from hydrocarbon, thermoplastic resin, and thermosetting resin;
(14) The method for producing a carbon nanotube granulated product as described in any one of (1), (9), and (10) to (13) above, in which the thermoplastic resin is one or more kinds selected from polypropylene, polycarbonate, and polyamide;
(15) The method for producing a carbon nanotube granulated product as described in any one of (1), (9), and (10) to (14) above, in which an oxidized carbon nanotube is used;
(16) The method for producing a carbon nanotube granulated product as described in any one of (1), (9), and (10) to (15) above, in which a carbon nanotube oxidized with a hydrophilic compound is used;
(17) The method for producing a carbon nanotube granulated product as described in any one of (1), (9), and (10) to (16) above, in which the hydrophilic compound is nitric acid, ozone, or peroxide;
(18) The method for producing a carbon nanotube granulated product as described in any one of (1), (9), and (10) to (17) above, in which granulation is performed in the presence of water;
(19) The method for producing a carbon nanotube granulated product as described in any one of (1), (9), and (10) to (18) above, in which a carbon nanotube is granulated while air contained in the carbon nanotube is deaerated; and
(20) The method for producing a carbon nanotube granulated product as described in any one of (1), (9), and (10) to (19) above, in which granulation is performed using two kinds of solvents forming an interface.

The granulation of a carbon nanotube according to the present invention can not only inhibit scattering of carbon nanotubes to facilitate measurement charging, but also prevent a detrimental effect on the human body due to the scattering, and also prevent contamination of the surroundings. In addition, transfer and storage can be made convenient. In a resin master batch and a dispersion, carbon nanotubes can be blended at a high concentration due to dramatic improvement of the dispersibility of the carbon nanotube, so that various performances such as strength property, electrical property, and thermal conductive property can be improved. Besides, the strength property, electrical property, and thermal conductive property obtained with one kind of carbon nanotube can be complementarily improved by blending carbon nanotube having different diameters and different lengths, and mixing and granulating of two or more kinds of carbon nanotubes allows the properties of the carbon nanotube to be further improved.

The present invention will, hereinafter, be illustrated.

### [Carbon Nanotube]

The carbon nanotube that may be used in the present invention is not particularly limited. Any of the carbon nanotubes having various shapes obtained by various production methods or post-treatment processes, which are mentioned above, may be used such as a single-walled carbon nanotube, a double-walled carbon nanotube, and a multi-walled carbon nanotube. It is also preferable that an agglomerated product obtained after the production process is pulverized into a fibrous powder-like form. The size of the carbon nanotube is not particularly limited, either. Generally, according to the measurement from a photograph taken by means of a transmission type or a reflection type electron microscope, some carbon nanotubes have a minor diameter of several nanometers to approximately 500 nm and a length of several dozens of nanometers to several dozens of micrometers. Among them, those having a diameter of 200 nm or less and a length of approximately several micrometers are preferable, and those having a wide distribution of diameters or lengths are more preferable. In particular, a multi-walled carbon nanotube may have a distribution of diameters or lengths depending on the production process or the post-treatment process. Here, the average value is represented as the diameter and the length of the carbon nanotube.

### [Single or Plural Kinds of Carbon Nanotubes]

A carbon nanotube is produced by arc discharge, catalyst-supported vapor deposition, laser ablation, or other methods, and the final shape and diameter or length of the carbon nanotube vary depending on those production methods. In addition, even in the same production process, the diameter or length thereof varies with different catalyst in compositions or different particles sizes. Therefore, as long as carbon nanotubes are produced using the same catalyst in the same production process under the same conditions, they may be said to have the same shape such as diameter or length even if they have a distribution. Such carbon nanotubes are referred to as a single kind of carbon nanotube, while carbon nanotubes produced under at least one different condition among the aforementioned conditions are hereinafter referred to as plural kinds of carbon nanotubes. In order to more effectively exploit the properties of a carbon nanotube, it is also preferred to use plural kinds of carbon nanotubes such as one having a changed diameter or one having a different length, and mix them together.
Specifically, among the carbon nanotubes, those having a wide distribution of diameters and aspect ratios or those having different diameters and different aspect ratios are used, a short carbon nanotube forms a path between long carbon nanotubes, thereby making a crosslinked structure, so that the strength of granulated products can be maintained. The crosslinked structure herein refers to a state where some bonding occurs either chemically or physically, to thereby provide improved physical strength or improved conductivity.

### [Oxidation Process]

A carbon nanotube preliminarily subjected to oxidation process to improve wettability may be used. The oxidation process generally includes vapor phase oxidation and liquid phase oxidation. Since the vapor phase oxidation and the liquid phase oxidation require different kinds and amounts of surface functional groups, the oxidation process needs to be considered. As for the vapor phase oxidation, a method of oxidizing a carbon nanotube using air, ozone, or nitrogen oxide while heating and mixing may be used. On the other hand, the liquid phase oxidation can control the wettability and the oxidation state. As a hydrophilic substance to be used in the liquid phase oxidation, permanganate, dichromate, persulfate, perchlorate, hydrogen peroxide, nitric acid, ozone, or nitrogen oxide may be used. Given the effect of residuals in the granulated product, hydrogen peroxide, nitric acid, and ozone are more preferable. However, some of the catalysts remaining in the carbon nanotube catalytically decompose these hydrophilic substances. In such case, carbon nanotubes are preliminarily subjected to acid cleaning to remove impurities, and then the above oxidation process may be performed.

### [Mixing]

In particular, when plural kinds of carbon nanotubes are used, they are preferably mixed prior to granulation. The mixing method is not particularly limited as long as the carbon nanotubes can be nearly homogeneously mixed in a mixing chamber, and the method can be performed in a vapor phase or a liquid phase. In particular, since each carbon nanotube has a different pour density, the use of plural kinds of carbon nanotubes changes the concentration of the carbon nanotube, which in turn may change the strength property, electrical property, and thermal conductive property. Therefore, mixing of plural kinds of carbon nanotubes is preferable in order to improve complementary properties. In particular, in the case of using plural kinds of carbon nanotubes, for example, when the carbon nanotubes are granulated in a dry process while being fluidized in a powder form, or when they are granulated in a wet process of immersing them in a solution, the uniformity of the mixed state of the plural kinds of carbon nanotubes may affect the strength and the size of the granulated product. In addition, when the plurality of carbon nanotubes are mixed insufficiently and heterogeneously, the properties of a resin master batch or a resin compound using the granulated product thus produced may vary. In consideration of these problems, it is necessary to mix the carbon nanotube in a fluidized bed or in a solution in a sufficient amount and concentration to mix according to the machine used. For example, in a liquid phase, an anchor impeller, a turbine blade, a paddle impeller, or the like may be used. Among them, a turbine blade or a paddle impeller is preferable.

### [Granulation Process]

According to the present invention, a carbon nanotube is granulated. "Granulation" herein is a process of making powders into a desired particle size, as generally used in the field of powder processing technologies. More specifically, the carbon nanotube is subjected to a granulation process by the following method. A carbon nanotube is obtained in the form of fibrous powders or aggregates thereof by the production method as described above, and also in the form of uneven powders obtained by pulverizing the aggregates. The carbon nanotubes in these conventionally known states are not limited and can an object to be granulated according to the present invention explained below.

In the present invention, the granulation process is performed using a vapor-liquid or a liquid-liquid interface.
Here, "the granulation process is performed using a vapor-liquid interface" refers that the granulation process is performed in a state where a vapor (usually air) in a carbon nanotube is brought into contact with a liquid to form a vapor-liquid interface.
On the other hand, "the granulation process is performed using a liquid-liquid interface" refers that the granulation process is performed in a state where a vapor (usually air) in a vapor in a carbon nanotube is previously replaced with a liquid and the liquid is then brought into contact with a liquid to form a liquid-liquid interface.
In the present invention, during the granulation process using these vapor-liquid or liquid-liquid interfaces, a solvent is present at a weight ratio of carbon nanotube:solvent of 1:1 or more.
The weight ratio is preferably 1:2 or more, or more preferably 1:3 or more.

### [Solvent]

In the granulation method of the present invention, the solvent that may be used during production includes, in addition to water, aliphatic solvent, aromatic solvent, ester solvent, ketone solvent, ether solvent, alcohol solvent, glycol solvent, nitrogen-containing solvent, and halogen solvent. In particular, in consideration of residues in the carbon nanotube granulated product after production, those having a low boiling point with less environmental impact are preferable. Specific examples thereof include hydrocarbon which is used as a raw material of a carbon nanotube, toluene, xylene, cyclohexanone, hexane, and methyl ethyl ketone,. From such conditions, a method of using a binder is also considered. In this case, the wettability to a carbon nanotube is improved and a cohesive force between carbon nanotubes is increased, thereby facilitating the preparation of the granulated product.

### (A) Method Using a Vapor-Liquid Interface

More specifically, particularly suitable methods include the following:
A first method is a method in which a carbon nanotube granulated body is formed using an interface between air and liquid by granulating a carbon nanotube while removing air in the carbon nanotube. The wettability of the carbon nanotube can be controlled to form a granulated product by immersing the carbon nanotube in water or an organic solvent in an amount once (weight ratio; the same applies hereinafter.) or more, more preferably twice or more, or even more preferably three times or more than the weight of the carbon nanotube and deaerating the carbon nanotube under reduced pressure.

The deaerating process in the above method (A) is a process in which the carbon nanotube is subjected to deaeration under reduced pressure and is then molded using a tablet machine and the like. That is, the "granulation" process includes a "molding" process. The present inventors have confirmed that after the pressure returns to normal, the carbon nanotube granulated product thus obtained by molding cannot maintain its shape and then returns back to a powder state. Therefore, in order to maintain the molded shape, for example, the carbon nanotube granulated product is placed in water in an amount once (weight ratio; the same applies hereinafter.) or more, more preferably twice or more, or even more preferably three times or more than the weight of the carbon nanotube, so that the strength for maintaining the cross-linked structure of the carbon nanotube can be exhibited. In other words, this process is a granulation using a vapor-liquid interface. The bulk specific gravity of the carbon nanotube granulated product during deaeration under reduced pressure needs to be 2 to 8 times, or preferably 3 to 7 times larger than that in a powder form. The stamping pressure also needs to be adjusted by a method capable of achieving this condition. The bulk specific gravity of the carbon nanotube granulated product that can be produced in this method is approximately twice as large as that before granulation. It can also be increased to three times or more than that before granulation. Since the bulk specific gravity of a granulated product is affected by that of a carbon nanotube serving as a raw material, it is also preferred to appropriately select the carbon nanotube.

A second method in the above method (A) includes steps of immersing a bulky carbon nanotube in a solvent, subjecting the immersed carbon nanotube to reduced pressure with stirring with an evaporator to thereby prepare a granular aggregate, and drying the granular aggregate. Specifically, first, a carbon nanotube is immersed in a solvent in an amount once or more, more preferably twice or more, or even more preferably three times or more than the weight of the carbon nanotube, and air is removed from the carbon nanotube under reduced pressure with stirring to granulate the carbon nanotube. According to this method, the shape and the size of the carbon nanotube aggregate can be controlled by adjusting the stirring speed and the deaerating conditions, and as a final step, a drying step, such as spray drying or using an airflow dryer is performed.

A third method in the above method (A) includes steps of feeding a bulky carbon nanotube in a powder form into a mixing chamber, etc. and adding thereto an organic solvent in portions in an amount once or more, more preferably twice or more, or even more preferably three times or more than the weight of the carbon nanotube with stirring. In this case, the organic solvent is absorbed into the carbon nanotube in the state of a liquid droplet, and as the dropwise addition continues, the entire carbon nanotube becomes wet and the air in the carbon nanotube is removed. This forms a vapor-liquid interface, so that a granulated product can be prepared. This granulated product can be obtained as a granulated product having a void in the interior thereof after drying. The organic solvent used at this time desirably has a low boiling point, provided that it has wettability to a carbon nanotube.

### (B) Method Using a Vapor-Liquid Interface

The air in the carbon nanotube is previously replaced with an organic solvent. As such method, a vapor-liquid interface is used with an organic solvent in the air in an amount once or more, more preferably twice or more, or even more preferably three times or more than the weight of the carbon nanotube, and after the carbon nanotube is immersed in water, a liquid-liquid interface is used with an organic solvent in an amount once or more, more preferably twice or more, or even more preferably three times or more than the weight of the carbon nanotube, to thereby form a spherical type aggregate of the carbon nanotube. Among the carbon nanotube granulated products produced in this method, using a carbon nanotube having a wide distribution of diameters and aspect ratios, or a carbon nanotube having different diameters and aspect ratios, a cross-linked structure is formed, so that the carbon nanotube granulated products having voids therein can maintain its strength.
In the method (B), even more specifically, the carbon nanotube is immersed in water until it reaches the plastic limit, and a water-insoluble solvent in an amount three times or more than the amount of the carbon nanotube is added thereto with stirring, so that the water-insoluble solvent accelerates wetting of the unwetted surface of the carbon nanotube together with removal of the air from the surface of the carbon nanotube. Subsequently, as the organic solvent is further added, an interface between the organic solvent and water is formed. The carbon nanotube is oriented on the interface, to thereby form a granulated product. The granulated product prepared according to this method is collected by filtration and then dried to obtain a granulated product having a void. According to this method, the shape and the size of the carbon nanotube aggregate can be controlled by adjusting the stirring speed and the shape of the stirring impeller. The organic solvent used at this time needs to be water insoluble, and preferably has a low boiling point. It is also possible to reduce the amount of solvent by using a binder or the like.

### [Binder]

A binder for facilitating granulation may be present during the granulation according to the present invention. Examples of the binder mainly include hydrocarbon compound, thermoplastic resin, thermosetting resin, surfactant, yellow wax, cellulose substance, lignin sulfonic acid, and organic fine particles. In particular, as an effective binder, a thermoplastic resin useful in the molding process of the granulated carbon nanotube may be used. Among them, resins such as carbon nanotube producing raw materials, polycarbonate, polyamide, polypropylene, polyethylene, polyester, acrylic resin, urethane resin, and cellulose resin are preferable. The use of these binders dissolved in water or an organic solvent allows the wettability of the carbon nanotube to water or the solvent to be controlled, and granulation can be achieved. In addition, the properties of the granulated product can be significantly improved. For example, 1) a resin master batch or a resin compound can have better compatibility to resin when prepared, and it is possible to improve the dispersibility within a resin and to concentrate the carbon nanotube; 2) a sea-island structure of resin can be formed by using a resin having poor compatibility to a resin master batch or a molding resin, and this phenomenon is used to form a network structure of carbon nanotubes, which can reduce the electrically-conductive volume resistivity of the resin; and 3) the carbon nanotube with a resin affixed thereto has improved wettability to a solvent system, which has an effect of improvement in dispersibility such as reduction of a dispersing agent.

### [Granulator]

The granulator used in the present invention is broadly divided into a horizontal type and a vertical type. The operation of a vertical type granulator is divided into a continuous type and a batch type. Some continuous type granulators simultaneously perform a granulating step and a drying step, which is suitable for mass production. On the other hand, some batch type granulators perform a granulating step and a drying step separately, and some require filtration etc. in the course of the operation to collect granulated products. Further, many horizontal type granulators employ a batch process, and the operation basically includes a drying step.

### [Carbon Nanotube Granulated Product]

The granulated product may have any shape such as a particle form and a tabular form. As described above, a desired shape can be obtained using a tablet machine, etc. and particles having an indefinite shape, a spherical shape, or a spheroidal shape can also be produced.

### [Determination of Pour Density of Carbon Nanotube Granulated Product]

In the present invention, the pour density of the carbon nanotube granulated product thus obtained varies depending on the carbon nanotube to be employed. The pour density herein is measured based on Carbon black for rubber industry-Characteristics of pelletized carbon black-Part 2: Determination of pour density (JIS K6219-2:2006) unless otherwise specified.

### [Shape and Strength of Carbon Nanotube Granulated Product]

The size of the carbon nanotube granulated product obtained according to the present invention is appropriately selected depending on the desired application. In consideration of workability, the size is preferably in the range of 0.3 mm or more and 10 mm or less, or preferably 0.5 mm or more and 4 mm or less. Further, the strength is in the range of 0.2 gw or more and 200 gw or less, or more preferably 50 gw or less, though not limited thereto. According to the aforementioned production method of the present invention, 50% by weight or more of a carbon nanotube granulated product having a particle size of 0.3 mm or more and 10 mm or less, 75% by weight or more of a carbon nanotube granulated product having a particle size of 0.3 mm or more and 10 mm or less, 50% by weight or more of a carbon nanotube granulated product having a particle size of 0.5 mm or more and 4 mm or less, and 75% by weight or more of a carbon nanotube granulated product having a particle size of 0.5 mm or more and 4 mm or less may be obtained. That is, equally-sized granulated products suitable for industrial use can be obtained efficiently.

### [Measurement of the Strength of Carbon Nanotube Granulated Product]

The strength of the carbon nanotube granulated product in the present invention can be measured referring to Carbon black for rubber industry-Characteristics of pelletized carbon black-Part 3: Determination of individual pellet crushing strength (JIS K6219-3:2006). According to JIS K6129-3:2006, the granulated product that does not pass through a sieve having a mesh of 1.0 mm or 1.4 mm is measured. However, the particle size of the carbon nanotube granulated product produced according to the present invention can be adjusted. Therefore, as a method for reflecting the overall granulated product, the granulated product is measured in a state where fine powders are removed therefrom, and is otherwise measured based on JIS K6129-3:2006. Although automatic measuring apparatuses and manual measuring apparatuses are available, it is desirable to select an apparatus capable of performing measurement according to JIS K6129-3:2006.

### [Measurement of the Shape of Carbon Nanotube Granulated Product]

The particle size of the carbon nanotube granulated product produced according to the present invention can be measured according to the mesh opening in the test sieve described in JIS Z-8801. It should be noted that according to JIS Z-8801, sieves having mesh openings of 0.3 mm, 4 mm, and 9.5 mm are available, and according to JIS K6219-4:2006, Carbon black for rubber industry-Characteristics of pelletized carbon black-Part 4: Determination of pellet size distribution, a sieve having a mesh opening of 0.3 mm is placed, subsequently, several kinds of sieves and a sieve having a mesh opening of 4 mm are placed, and a sieve having a mesh opening of 9.5 mm is placed over them, and the measurement is then performed to determine the particle size.

### EXAMPLES

The present invention will, hereinafter, be illustrated using Examples further in detail. The present invention is not limited to the following Examples as long as it is a possible method for achieving an object of the present invention.
First, the above method (A) will be illustrated.

### [Example 1]

Thirty parts of carbon nanotube having a diameter of approximately 150 nm, a length of approximately 5 µm, and a bulk specific gravity of 0.080 kg/l was placed in a 1 L 3-necked flask, and 570 parts of water was subsequently added thereto with stirring to immerse the carbon nanotube. The carbon nanotube thus immersed was stirred with a turbine blade at 300 rpm for 6 hours while being subjected to deaeration under reduced pressure, so that a granulated product was formed. The granulated product was collected by filtration and then dried at 100°C for 7 hours, so that a carbon nanotube granulated product was obtained. The carbon nanotube granulated product had a particle size of 1.0 to 1.4 mm and a bulk specific gravity of approximately 0.190 kg/l.

### [Example 2]

Thirty parts of carbon nanotube having a diameter of approximately 150 nm, a length of approximately 5 µm and a bulk specific gravity of 0.080 kg/l was subjected to deaeration under pressure until the carbon nanotube had a bulk specific gravity of 0.400 kg/l. Subsequently, the carbon nanotube thus deaerated under pressure was rapidly added to 600 g of water under stirring with a turbine blade at 300 rpm to maintain its shape, and thereafter stirring was performed for 4 hours to granulate the carbon nanotube. The granulated product was collected by filtration and then dried at 100°C for 7 hours, so that a carbon nanotube granulated product was obtained. The granulated product thus obtained had a particle size of 0.7 to 2.0 mm.

### [Example 3]

Nine parts of carbon nanotube having a diameter of approximately 100 nm, a length of approximately 5 µm, and a bulk specific gravity of 0.021 kg/l was immersed in 591 parts of water in a 1 L beaker. The carbon nanotube thus immersed was fully stirred with a turbine blade at 300 rpm and then subjected to deaeration. A solution containing the carbon nanotube was fed into an airflow dryer, so that a carbon nanotube granulated product was obtained. The granulated product had a particle size of 0.5 to 1.4 mm and a bulk specific gravity of 0.056 kg/l.

### [Comparative Example 1]

Thirty parts of carbon nanotube having a diameter of approximately 150 nm, a length of approximately 5 µm, and a bulk specific gravity of 0.080 kg/l was placed in a 1 L 3-necked flask, and 570 parts of water was subsequently added thereto with stirring to immerse the carbon nanotube. The carbon nanotubes thus immersed was stirred with a turbine blade at 300 rpm for 6 hours. Thereafter, the stirred product was collected by filtration and then dried at 100°C for 7 hours, so that a carbon nanotube granulated product was obtained. Although the carbon nanotube granulated product had a thin tabular shape, it was brittle and was crushed by a light impact, failing to produce a granulated product.

### [Measurement of the Strength of Granulated Product]

The strength of the granulated product was measured according to JIS K6129-3:2006 except that as a method for reflecting the overall granulated product, a pellet hardness tester AS2000 PHT AUTO SYSTEM was used to measure the strength in a state where fine powders were removed.
The measurement results of Examples 1 to 3 and Comparative Example 1 are shown in Table 1 in the following.

**[Table 1]**

| | Ex. 1 | Ex. 2 | Ex. 3 | Comp. Ex. 1 |
|---|---|---|---|---|
| Strength of Granulated Product (gw) | 1.7 | 2.5 | 1.3 | Granulation Impossible. Measurement Failed. |

The result of Table 1 revealed that each of the carbon nanotube granulated products of Examples 1 to 3 had a given strength.

Next, the method (B) described above will be explained in Examples 4 and 5 and Comparative Examples 2 to 4. The strength of the granulated product was measured in the same method as above.

### [Example 4]

Thirty parts of carbon nanotube having a diameter of 10 to 30 nm and a length of 5 to 10 µm was immersed in 970 parts of water in a 2 L beaker, and fully stirred with a turbine blade at 600 rpm. Subsequently, 300 parts of toluene was added thereto to fully wet the carbon nanotube. After 3-hour stirring, a granulated product was collected by filtration. At this time, carbon nanotube deposits were left at the bottom of the beaker. Further, the filtered granulated product was dried under reduced pressure at 70°C, the toluene was roughly distilled off, and thereafter, the remaining product was dried at 100°C for 7 hours, so that a carbon nanotube granulated product was obtained. The granulated product had a particle size of 0.5 to 2.3 mm.

### [Example 5]

Twenty parts of carbon nanotube having a diameter of approximately 150 nm, a length of approximately 5 µm, and a bulk specific gravity of 0.091 kg/l and 5 parts of carbon nanotube having a diameter of approximately 100 nm, a length of approximately 5 µm, and a bulk specific gravity of 0.021 kg/l were immersed in 570 parts of water in a 1 L beaker. Subsequently, the immersed carbon nanotubes were sufficiently stirred and mixed with a turbine blade at 300 rpm. Then, 70 parts of xylene was added thereto, and stirring and mixing were continued. Thereafter, the stirred product was collected by filtration and then dried to thereby obtain a carbon nanotube granulated product. The granulated product had a particle size of 0.5 to 2.3 mm.

### [Example 6]

Twenty-five parts of carbon nanotube having a diameter of approximately 150 nm, a length of approximately 5 µm, and a bulk specific gravity of 0.091 kg/l, and 5 parts of carbon nanotube having a diameter of 10 to 30 nm and a length of 5 to 10 µm were added in a 2 L beaker, and the mixture was sufficiently mixed with a paddle impeller at 300 rpm. Subsequently, 110 parts of ethanol was added in portions with stirring to perform granulation operation. The granulated product was collected, the collected granulated product was dried under reduced pressure at 70°C, the ethanol was roughly distilled off, and thereafter, the remaining product was dried at 100°C for 7 hours, so that a carbon nanotube granulated product was obtained. The granulated product had a particle size of 0.5 to 2.0 mm.

### [Comparative Example 2]

Thirty parts of carbon nanotube having a diameter of 10 to 30 nm and a length of 5 to 10 µm was immersed in 970 parts of water in a 2 L beaker, and fully stirred with a turbine blade at 600 rpm. Subsequently, the filtered paste was dried under reduced pressure at 70°C, and the resulting product was dried at 100°C for 7 hours, so that a carbon nanotube granulated product was obtained. Although the carbon nanotube granulated product had a thin tabular shape, it was brittle and was crushed by a light impact, failing to produce a granulated product.

### [Comparative Example 3]

Thirty parts of carbon nanotube having a diameter of approximately 150 nm, a length of approximately 5 µm, and a bulk specific gravity of 0.091 kg/l was placed in a 1 L 3-necked flask, and 570 parts of water was subsequently added thereto with stirring to immerse the carbon nanotube. The carbon nanotubes thus immersed was stirred with a turbine blade at 300 rpm for 6 hours. Thereafter, the stirred product was collected by filtration and then dried at 100°C for 7 hours, so that an intended carbon nanotube granulated product was obtained. Although the carbon nanotube granulated product had a thin tabular shape, it was brittle and was crushed by a light impact, failing to produce a granulated product.

### [Comparative Example 4]

Twenty-five parts of carbon nanotube having a diameter of approximately 150 nm, a length of approximately 5 µm, and a bulk specific gravity of 0.091 kg/l and 5 parts of carbon nanotube having a diameter of 10 to 30 nm and a length of 5 to 10 µm were added in a 2 L beaker, and the mixture was sufficiently mixed with a paddle impeller at 300 rpm. Subsequently, water was added dropwise with stirring. The dropwise addition was completed at the time when all the carbon nanotubes were adhered to the surface of the beaker, the carbon nanotubes were collected, dried under reduced pressure at 70°C, and then dried at 100°C for 7 hours, so that a carbon nanotube granulated product was obtained. Although the carbon nanotube granulated product had a thin tabular shape, it was brittle and was crushed by a light impact, failing to produce a granulated product.

**[Table 2]**

| | Ex. 4 | Ex. 5 | Ex. 6 | Comp. Ex. 2 | Comp. Ex. 3 | Comp. Ex.4 |
|---|---|---|---|---|---|---|
| Strength of Granulated Product (gw) | 19.5 | 2.0 | 2.3 | Measurement Failed. | Measurement Failed. | Measurement Failed. |

The result of Table 2 revealed that each of the carbon nanotube granulated products of Examples 4 to 6 had a given strength as a granulated product.

Next, a method for granulating a carbon nanotube using a binder will be illustrated in Examples 7 to 10. The strength of the granulated product was measured in the same method as above.

### [Example 7]

Thirty parts of carbon nanotube having a diameter of approximately 150 nm, a length of approximately 5 µm, and a bulk specific gravity of 0.091 kg/l was added to 2 parts of fine particles of polycarbonate serving as a granulation core, and the mixture was sufficiently mixed. Thereafter, the carbon nanotube thus mixed was subjected to deaeration under pressure until the carbon nanotube had a bulk specific gravity of 0.400 kg/l. Subsequently, the carbon nanotube thus deaerated under pressure was rapidly added to water under stirring with a turbine blade at 300 rpm to maintain its shape, and thereafter stirring was performed for 4 hours to granulate the carbon nanotube. The granulated product was collected by filtration and then dried at 100°C for 7 hour. As a result, an intended carbon nanotube granulated product was obtained. The granulated product had a particle size of 0.5 to 4.0 mm.

### [Example 8]

Nine parts of carbon nanotube having a diameter of approximately 100 nm, a length of approximately 5 µm, and a bulk specific gravity of 0.421 kg/l were immersed in 590 parts of toluene having one part of low-molecular polypropylene dissolved (dispersed) in a 1 L beaker. The carbon nanotube thus immersed was fully stirred with a turbine blade at 300 rpm and then subjected to deaeration. A solution containing the carbon nanotube was fed into an airflow dryer, so that the intended carbon nanotube granulated product was obtained. The granulated product had a particle size of 0.5 to 3.4 mm and a bulk specific gravity of 0.060 kg/l.

### [Example 9]

Thirty parts of carbon nanotube having a diameter of 10 to 30 nm and a length of 5 to 10 µm was immersed in 970 parts of water in a 2 L beaker, and fully stirred with a turbine blade at 600 rpm. Subsequently, 300 parts of toluene having 1.5 parts of nylon 66 dissolved (dispersed) therein was added thereto to fully wet the carbon nanotube. After 3-hour stirring, a granulated product was collected by filtration. At this time, carbon nanotube deposits were left at the bottom of the beaker. Further, the filtered granulated product was dried under reduced pressure at 70°C, the toluene was roughly distilled off, and thereafter, the remaining product was dried at 100°C for 7 hours, so that a carbon nanotube granulated product was obtained. The granulated product had a particle size of 0.5 to 2.8 mm.

### [Example 10]

Twenty-five parts of carbon nanotube having a diameter of approximately 150 nm, a length of approximately 5 µm, and a bulk specific gravity of 0.091 kg/l, and 5 parts of carbon nanotube having a diameter of 10 to 30 nm and a length of 5 to 10 µm were added in a 2 L beaker, and the mixture was sufficiently mixed with a paddle impeller at 300 rpm. Subsequently, 110 parts of N methyl-2-pyrrolidone having 1.5 parts of polyamide dissolved therein was added in portions with stirring to perform granulation operation. The granulated product thus obtained was collected and dried under reduced pressure. The N methyl-2-pyrrolidone was roughly distilled off, and then dried at 200°C for 7 hours, so that a carbon nanotube granulated product was obtained. The granulated product had a particle size of 0.5 to 3.0 mm.

**[Table 3]**

| | Ex. 7 | Ex. 8 | Ex. 9 | Ex. 10 |
|---|---|---|---|---|
| Strength of Granulated Product (gw) | 4.6 | 8.0 | 17.2 | 3.0 |

The result of Table 3 revealed that each of the carbon nanotube granulated products of Examples 7 to 10 had a given strength as a granulated product.

Next, a method for granulating a carbon nanotube after subjecting the carbon nanotube to oxidation process will be illustrated. The strength of the granulated product was measured in the same method as above. The reference examples for performing oxidation process will first be explained. It is not necessary to be limited to the following methods as long as it is intended to achieve the oxidation process in the present invention.
Reference examples will, hereinafter, be illustrated further in detail.

### [Reference Example 1]

Thirty parts of carbon nanotube having a diameter of approximately 150 nm, a length of approximately 5 µm, and a bulk specific gravity of 0.080 kg/l was added into a 1 L 3-necked flask containing 570 parts of 30% hydrogen peroxide solution and was immersed with stirring to react at room temperature for 48 hours. The resulting solution was filtered, and thereafter, the filtered product was washed with water and then dried.

### [Reference Example 2]

Ten parts of carbon nanotube having a diameter of approximately 100 nm, a length of approximately 5 µm, and a bulk specific gravity of 0.021 kg/l was introduced into a fluidized reaction bed at room temperature with oxygen gas containing 1.5% ozone at a flow rate of 20 L/hr, and was reacted over 1.5 hours.

### [Reference Example 3]

Thirty parts of carbon nanotube having a diameter of 10 to 30 nm and a length of 5 to 10 µm was added to 970 parts of 60% aqueous nitric acid and was reacted at room temperature for 48 hours. Thereafter, the mixture was dried, filtered, washed with water, and then dried.

The present invention will, hereinafter, be illustrated using Examples further in detail.

### [Example 11]

Thirty parts of the oxidized carbon nanotube prepared by the method in Reference Example 1 was placed in a 1 L 3-necked flask and subsequently 570 parts of water was added thereto with stirring to immerse the carbon nanotube. The carbon nanotubes thus immersed was stirred with a turbine blade at 300 rpm for 6 hours while being subjected to deaeration under reduced pressure, so that a granulated product having a particle size of 0.6 to 3.0 mm was formed. The granulated product was collected by filtration and then dried at 100°C for 7 hours, so that a carbon nanotube granulated product was obtained.

### [Example 12]

Nine parts of the oxidized carbon nanotube prepared by the method in Reference Example 2 was immersed in 591 parts of water in a 1 L beaker. The carbon nanotube thus immersed was fully stirred with a turbine blade at 300 rpm and then subjected to deaeration. A solution containing the carbon nanotube was fed into an airflow dryer, so that a carbon nanotube granulated product was obtained. The granulated product had a particle size of 0.5 to 2.4 mm.

### [Example 12]

Thirty parts of the oxidized carbon nanotube prepared in Reference Example 3 was immersed in 970 parts of water in a 2 L beaker and fully stirred with a turbine blade at 600 rpm. Subsequently, 300 parts of toluene was added thereto to fully wet the carbon nanotube. After 3-hour stirring, a granulated product was collected by filtration. Further, the filtered granulated product was dried under reduced pressure at 70°C, the toluene was roughly distilled off and thereafter, the remaining product was dried at 100°C for 7 hours, so that a carbon nanotube granulated product was obtained. The granulated product had a particle size of 1.0 to 2.8 mm.

### [Example 14]

Twenty-five parts of the oxidized carbon nanotube prepared in Reference Example 1 and 5 parts of the oxidized carbon nanotube prepared in Reference Example 3 were added in a 2 L beaker and the mixture was sufficiently mixed with a paddle impeller at 300 rpm. Subsequently, 110 parts of ethanol was added in portions with stirring to perform granulation operation. The granulated product was collected, the collected granulated product was dried under reduced pressure at 70°C, the ethanol was roughly distilled off, and thereafter, the remaining product was dried at 100°C for 7 hours, so that a carbon nanotube granulated product was obtained. The granulated product had a particle size of 0.7 to 2.0 mm.

**[Table 4]**

| | Ex. 11 | Ex. 12 | Ex. 13 | Ex. 14 |
|---|---|---|---|---|
| Strength of Granulated Product (gw) | 1.8 | 2.7 | 22.0 | 5.2 |

The result of Table 4 revealed that each of the carbon nanotube granulated products of Examples 11 to 14 had a given strength as a granulated product.

### EFFECT OF THE INVENTION

The following various effects can be obtained according to the present invention. Firstly, poor workability of charging carbon nanotubes during the preparation of a resin master batch or a dispersion because of the bulkiness has been improved. This improvement is attributed to the granulation of a carbon nanotube, and can not only inhibit scattering of the carbon nanotube to facilitate measurement charging, but also prevent a detrimental effect on the human body due to the scattering, and also prevent contamination of the surroundings. Further, a larger amount of granulated product can be stored in a storage tank etc. because of its higher bulk specific gravity, and a "bridge phenomenon" which may occur during transfer from the tank, etc. can also be prevented. Accordingly, carbon nanotubes can be handled continuously and uniformly, so that a resin master batch and a dispersion can be blended at a high concentration, and it is considered that various performances such as strength property, electrical property, and thermal conductive property may be improved. Secondly, in the case of using plural kinds of carbon nanotubes, resin master batches or dispersions needed to be separately prepared because of their bulkiness. However, the use of the granulated product according to the present invention allows preparation of one kind of resin master batch or dispersion, which facilitates simultaneous use of plural kinds of carbon nanotubes. Moreover, the plural kinds of carbon nanotubes can be uniformly dispersed. This can be the base to exploit various properties of a carbon nanotube, such as strength property, electrical property, and thermal conductive property, which could not have been obtained heretofore with one kind of carbon nanotube.

### INDUSTRIAL APPLICABILITY

The present invention can solve the aforementioned conventional problems and can be widely used in the industrial application fields such as resin composite, rubber molding, paint, ink and others. The granular carbon nanotube granulated product of the present invention can be easily produced according to the production method of the present invention.

## Claims

1. A method for producing a carbon nanotube granulated product comprising granulating a carbon nanotube using a vapor-liquid interface or a liquid-liquid interface,
wherein a weight ratio of carbon nanotube:solvent is 1:3 or more.

2. A carbon nanotube granulated product obtained by granulating a carbon nanotube using a vapor-liquid interface or a liquid-liquid interface so that a weight ratio of carbon nanotube:solvent is 1:3 or more.

3. The carbon nanotube granulated product according to claim 2, wherein the carbon nanotube granulated product having a particle size of 0.3 mm or more and 10 mm or less is 50% by weight or more.

4. The carbon nanotube granulated product according to claim 2 or 3, wherein the carbon nanotube granulated product having a particle size of 0.3 mm or more and 10 mm or less is 75% by weight or more.

5. The carbon nanotube granulated product according to any one of claims 2 to 4,
wherein the carbon nanotube granulated product having a particle size of 0.5 mm or more and 4 mm or less is 50% by weight or more.

6. The carbon nanotube granulated product according to any one of claims 2 to 5,
wherein the carbon nanotube granulated product having a particle size of 0.5 mm or more and 4 mm or less is 75% by weight or more.

7. The carbon nanotube granulated product according to any one of claims 2 to 6, having a spherical or spheroidal shape.

8. The carbon nanotube granulated product according to any one of claims 2 to 7, having a strength of 0.2 gw or more and 200 gw or less.

9. The method for producing a carbon nanotube granulated product according to claim 1, comprising granulating a carbon nanotube having a diameter of 0.5 nm or more and 500 nm or less.

10. The method for producing a carbon nanotube granulated product according to claim 1 or 9, comprising granulating a carbon nanotube having a diameter of 0.5 nm or more and 200 nm or less.

11. The method for producing a carbon nanotube granulated product according to claim 1, 9, or 10, wherein the carbon nanotube granulated product is produced using a binder.

12. The method for producing a carbon nanotube granulated product according to claim 1, 9, 10, or 11, wherein granulation is performed in the presence of the binder.

13. The method for producing a carbon nanotube granulated product according to any one of claims 1, 9, and 10 to 12, wherein the binder comprises one or more kinds of solutions selected from hydrocarbon, thermoplastic resin, and thermosetting resin.

14. The method for producing a carbon nanotube granulated product according to any one of claims 1, 9, and 10 to 13, wherein the thermoplastic resin is one or more kinds selected from polypropylene, polycarbonate, and polyamide.

15. The method for producing a carbon nanotube granulated product according to any one of claims 1, 9, and 10 to 14, wherein an oxidized carbon nanotube is used.

16. The method for producing a carbon nanotube granulated product according to any one of claims 1, 9, and 10 to 15, wherein a carbon nanotube oxidized with a hydrophilic compound is used.

17. The method for producing a carbon nanotube granulated product according to any one of claims 1, 9, and 10 to 16, wherein the hydrophilic compound is nitric acid, ozone, or peroxide.

18. The method for producing a carbon nanotube granulated product according to any one of claims 1, 9, and 10 to 17, wherein granulation is performed in the presence of water.

19. The method for producing a carbon nanotube granulated product according to any one of claims 1, 9, and 10 to 18, wherein a carbon nanotube is granulated while air contained in the carbon nanotube is deaerated.

20. The method for producing a carbon nanotube granulated product according to any one of claims 1, 9, and 10 to 19, wherein granulation is performed using two kinds of solvents forming an interface.
